# EUROPÄISCHE PATENTSCHRIFT

(11) **EP 0 548 663 B1**
(45) Veröffentlichungstag und Bekanntmachung des Hinweises auf die Patenterteilung: **10.07.1996**
(21) Anmeldenummer: 92120920.1
(22) Anmeldetag: 08.12.1992
(51) Int. Cl.: H04B 1/38, H01Q 1/24

(54) **Kompaktes Funkgerät, insbesondere Handfunkgerät, mit versenkbarer oder umklappbarer Antenne**
Compact, especially portable, radio transceiver with retractable or collapsible antenna
Radio émetteur-récepteur compact, particulièrement portable avec un antenne rétractable ou pliable

(30) Priorität: 19.12.1991 DE 4142093
(43) Veröffentlichungstag der Anmeldung: 30.06.1993
(73) Patentinhaber: SIEMENS AKTIENGESELLSCHAFT, 80333 München (DE)
(72) Erfinder: Molière, Thomas, W-8000 München 40 (DE); Müller, Friedrich, W-8000 München 71 (DE)

(56) Entgegenhaltungen:
- GB-A- 2 219 911
- PATENT ABSTRACTS OF JAPAN no. 10113 (E-399)

## Beschreibung

Die Erfindung bezieht sich auf ein Funkgerät der im Oberbegriff des Patentanspruchs 1 beschriebenen Art.

Zur Erreichung einer größtmöglichen Reichweite und Entkopplung der Strahlung vom Benutzer wurde bereits vorgeschlagen, als Antenne eines Handportables einen Halbwellenstrahler zu benutzen und sie mit einem verlängerten Fußpunkt zu versehen. Eine solche Antenne ist allerdings verhältnismäßig groß. Dies bringt insbesondere das Problem, sie für den Transport oder den Betrieb auf einer Tischhalterung zu verkleinern, ohne die Abstrahlungseigenschaften zu verschlechtern. Bei einer Verkleinerung oder einem Einschieben der Antenne verstimmt sie sich normalerweise oder wird in ihrer Bandbreite eingeschränkt.

Zur Beseitigung dieser Nachteile ist es vorstellbar, die herausschiebbare Halbwellenantenne so weit zu verkürzen, daß sie im eingeschobenen Zustand klein genug wird. Dann wird sie jedoch sogar im ausgeschobenen Zustand gegenüber einer Halbwellenantenne voller Länge Zusatzverluste aufweisen.

Eine Verstimmung läßt sich vermeiden, indem man dafür Sorge trägt, daß sich die Antenne im eingeschobenen Zustand nicht in der Nähe elektrisch leitender Strukturen befindet. Eine solche Lösung benötigt jedoch zusätzlichen Einbauraum und ist deshalb für kompakte Funkgeräte, insbesondere für Handfunkgeräte, wenig geeignet. Auch würde das Strahlungsdiagramm der Antenne stark beeinträchtigt.

Eine andere Möglichkeit bestünde in der Verwendung einer zweiten, z.B. integrierten Antenne (Hilfsantenne)(z.B. GB-A-2219911). Abgesehen davon, daß die Hilfsantenne nie die Strahlungsleistung der Hauptantenne erreichen kann, haben solche Anordnungen mit integrierter Antenne den Nachteil, daß letztere die Funktion de Hauptantenne stört, indem sie ihr Energie entzieht. Umgekehrt stört die Hauptantenne die integrierte Hilfsantenne in ihrer Funktion, wenn sie versenkt wird. Ein weiterer Nachteil besteht darin, daß die integrierte Hilfsantenne ein nicht unerhebliches Einbauvolumen benötigt.

Der Erfindung liegt die Aufgabe zugrunde, die vorstehend aufgeführten Nachteile zu beseitigen und ein kompaktes Funkgerät mit einer Antenne zu schaffen, mit der eine große Reichweite und Entkopplung der Strahlung vom Benutzer erzielt wird und die für den Transport oder den Betrieb auf einer Tischhalterung klein genug ist ohne Verschlechterung der Abstrahlungseigenschaften.

Diese Aufgabe wird durch die im Anspruch 1 aufgeführten Merkmale gelöst.

Vorteilhafte Ausgestaltungen und Weiterbildungen des Erfindungsgegenstandes sind in den Unteransprüchen angegeben, auf die hiermit zur Verkürzung der Beschreibung ausdrücklich verwiesen wird.

Nachstehend wird die Erfindung anhand eines in der Zeichnung dargestellten Ausführungsbeispiels näher erläutert.

Es zeigen:
- Figur 1: die Antenne des in einer Teildarstellung wiedergegebenen Funkgerätes in einer Ansicht und im Schnittbild im ausgeschobenen Zustand und
- Figur 2: die entsprechende Darstellung der Antenne im eingeschobenen Zustand.

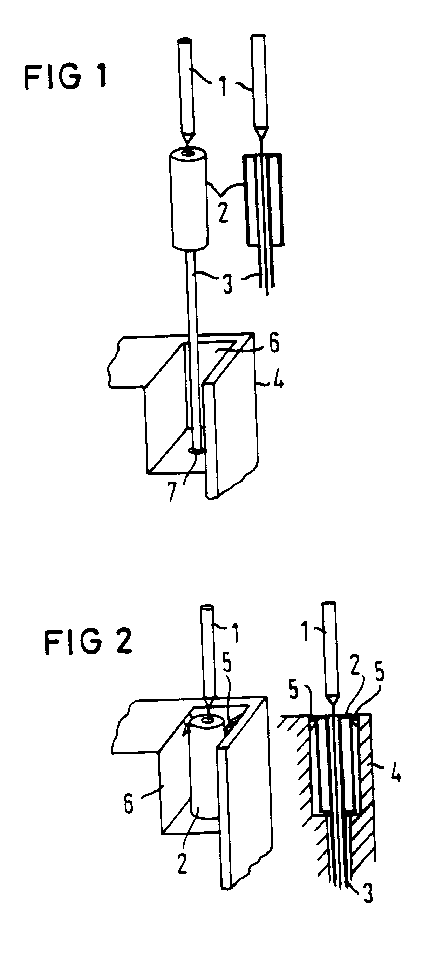

In den Figuren 1 und 2 ist das Gehäuse des in einer Teildarstellung gezeichneten Funkgerätes mit 4 bezeichnet. An der Innenseite des Gehäuses 4 befindet sich eine kammerförmige Ausnehmung 6 mit einer Öffnung 7 am Boden. Die Antenne besteht aus einem λ/4-Oberteil 1 an den ein λ/4-Sperrtopf 2 angeschlossen ist. Über eine 50-Ohm-Speiseleitung 3, die durch die Öffnung 7 am Boden der Kammer 6 hindurchtritt und durch den Sperrtopf 2 hindurchgeführt ist, erfolgt die Speisung der Antenne 1.

Im ausgeschobenen Zustand der Sperrtopf-Antenne gemäß Figur 1 wird diese durch den verlängerten Fußpunkt so weit aus dem Funkgerät herausgezogen, daß eine Einstrahlung in den Kopf des Benutzers und eine Abschaltung der Strahlung in Richtung des Kopfes vermieden werden. Im eingeschobenen Zustand ragt lediglich das λ/4-Oberteil 1 aus dem Gehäuse des Funkgerätes heraus, während der λ/4-Sperrtopf 2 in die Ausnehmung 6 des Gehäuses 4 des Funkgerätes eintaucht. An der Innenseite der Ausnehmung 6 sind am oberen Rand Massefedern 5 angebracht, die an der Außenseite des λ/4-Sperrtopfes 2 anliegen. Damit wird erreicht, daß der Halbwellen-Sperrtopf-Dipol im eingeschobenen Zustand so mit der elektrischen Masse des Funkteilgehäuses verbunden wird, daß diese als Gegengewicht für den noch herausstehenden Viertelwellen-Vertikalstrahler 1 wirkt. In dieser, in Figur 2 gezeigten Lage ist die Antenne für Transport und Tischposition klein genug.

Statt der Masseverbindung über die Massefedern 5 kann der obere Rand des Sperrtopfes 2 auch kapazitiv geerdet werden. Dann lassen sich mechanische Schleifspuren vermeiden. Dazu wird der Sperrtopf mit einer Kunststoffhülse umgeben, die in die Metallkammer 6 eintaucht. Wenn durch diese Kapazität ein Blindwiderstand von weniger als etwa 5 Ohm sichergestellt wird, liegt ein einwandfreier Masseanschluß des Gegengewichtes des Viertelwellenstrahlers vor. Bei niedrigen Frequenzen oder nicht ausreichender Kapazität kann der Massewiderstand durch die Serienschaltung einer kleinen Induktivität, die mit der Kapazität einen Serienresonanzwiderstand bildet, auf kleinere Werte gebracht werden.

Der herausstehende Viertelwellen-Vertikalstrahler kann für den Transport oder sogar eingeschränkten Funkbetrieb umgeklappt werden. Hierzu kann am niederohmigen Einspeisepunkt des Viertelwellenstrahlers ein Gelenk angebracht werden. Bei hohen Sendefrequenzen ist die Viertelwellenantenne kürzer als die Breite des Funkgerätes, so daß sie beim Umklappen völlig im Oberteil des Gerätegehäuses versenkt werden kann.

## Patentansprüche

1. Kompaktes Funkgerät, insbesondere Handfunkgerät, mit einer versenkbaren oder umklappbaren Antenne, **dadurch gekennzeichnet**, daß die Antenne als aus dem Funkgerät herausziehbarer Halbwellen-Sperrtopf-Dipol -Dipol ausgebildet ist, bestehend aus einem λ/4-langen Oberteil (1), einem sich daran anschließenden λ/4-Sperrtopf (2) und einer daran angeschlossenen Speiseleitung (3), und daß die Antenne im eingeschobenen Zustand als Viertelwellenstrahler arbeitet, indem der Masseanschluß des speisenden Koaxialkabels an die Funkgerätemasse gelegt wird.

2. Funkgerät nach Anspruch 1, **dadurch gekennzeichnet**, daß seitlich im Gehäuse des Funkgerätes eine Ausnehmung (6) vorgesehen ist zur Aufnahme des λ/4-Sperrtopfes (2) im eingeschobenen Zustand der Antenne und am Boden der Ausnehmung eine Öffnung (7) angebracht ist, durch die die Speiseleitung (3) in das Gehäuse eintaucht.

3. Funkgerät nach Anspruch 1 oder 2, **dadurch gekennzeichnet**, daß am oberen Rand der Ausnehmung (6) Masse-Federn (5) angebracht sind, die bei eingeschobener Antenne an der Außenseite des λ/4-Sperrtopfes (2) anliegen.

4. Funkgerät nach einem der Ansprüche 1 bis 3, **dadurch kennzeichnet,** daß der Massekontakt zwischen der Außenseite des λ/4-Sperrtopfes (2) und der Ausnehmung (6) im Funkgerätegehäuse (4) kapazitiv vorgenommen wird.

5. Funkgerät nach einem der Ansprüche 1 bis 3, **dadurch gekennzeichnet**, daß der Massekontakt zwischen der Außenseite des λ/4-Sperrtopfes (2) und der Ausnehmung (6) im Funkgerätegehäuse (4) über eine Kapazität mit in Serie geschalteter Induktivität vorgenommen wird.

6. Funkgerät nach einem der Ansprüche 1 bis 5, **dadurch gekennzeichnet,** daß das im eingeschobenen Zuder Antenne aus dem Gehäuse (4) des Funkgerätes herausstehende λ/4-Oberteil (1) und der λ/4-Sperrtopf (2) über ein Gelenk miteinander verbunden sind.

## Claims

1. Compact radio transceiver, in particular handheld radio transceiver, having a retractable or collapsible antenna, characterized in that the antenna is constructed as a half-wave folded-top dipole antenna which can be pulled out from the radio transceiver and comprises a λ/4 long upper part (1), an adjoining λ/4 folded top (2) and a feeder line (3) which is connected thereto, and in that the antenna operates in the retracted state as a quarter-wave radiator in that the earth connection of the feeding coaxial cable is connected to the earth of the radio transceiver.

2. Radio transceiver according to Claim 1, characterized in that a recess (6) is provided in the side of the housing of the radio transceiver for receiving the λ/4 folded top (2) in the retracted state of the antenna and an opening (7) through which the feeder line (3) dips into the housing is provided at the bottom of the recess.

3. Radio transceiver according to Claim 1 or 2, characterized in that earth springs (5) which bear against the outside of the λ/4 folded top (2) when the antenna is retracted are provided at the upper edge of the recess (6).

4. Radio transceiver according to one of Claims 1 to 3, characterized in that the earth contact is established capacitively between the outside of the λ/4 folded top (2) and the recess (6) in the radio transceiver housing (4).

5. Radio transceiver according to one of Claims 1 to 3, characterized in that the earth contact is established between the outside of the λ/4 folded top (2) and the recess (6) in the housing (4) of the radio transceiver by means of a capacitor with the inductor connected in series.

6. Radio transceiver according to one of Claims 1 to 5, characterized in that, in the retracted state of the antenna, the λ/4 upper part (1), which projects out of the housing (4) of the radio transceiver, and the λ/4 folded top (2) are connected to one another by means of a joint.

## Revendications

1. Appareil radio ramassé, notamment appareil radio tenant dans la main, comportant une antenne escamotable ou rabattable, caractérisé en ce que l'antenne est sous forme d'un dipôle à manchette demi-onde, pouvant être retiré de l'appareil radio et constitué d'une partie (1) supérieure d'une longueur de λ/4, d'une manchette (2) λ/4 s'y raccordant et d'une ligne (3) d'alimentation s'y raccordant et l'antenne fonctionne, lorsqu'elle est rétractée, comme élément rayonnant quart d'onde, par le fait que la borne de masse du câble coaxial d'alimentation est mise à la masse de l'appareil radio.

2. Appareil radio suivant la revendication 1, caractérisé en ce qu'il est prévu sur un côté du boîtier de l'appareil radio un évidemment (6) destiné à la réception, lorsque l'antenne est rétractée, de la manchette (2) λ/4 et il est ménagé au fond de l'évidement une ouverture (7), par laquelle la ligne (3) d'alimentation s'enfonce dans le boîtier.

3. Appareil radio suivant la revendication 1 ou 2, caractérisé en ce qu'il est prévu au bord supérieur de l'évidement (6), des ressorts (5) de masse, qui s'appliquent, lorsque l'antenne est rétractée, au côté extérieur de la manchette (2) λ/4.

4. Appareil radio suivant l'une des revendications 1 à 3, caractérisé en ce que la mise en contact avec la masse entre le côté extérieur de la manchette (2) λ/4 et l'évidement (6) dans le boîtier (4) de l'appareil radio est effectuée de manière capacitive.

5. Appareil radio suivant l'une des revendications 1 à 3, caractérisé en ce que la mise en contact avec la masse entre le côté extérieur de la manchette (2) λ/4 et l'évidement (6) dans le boîtier (4) de l'appareil radio est effectuée par une capacité et par une inductance branchée en série avec la capacité.

6. Appareil radio suivant l'une des revendications 1 à 5, caractérisé en ce que la partie supérieure (1) λ/4 dépassant, lorsque l'antenne est rétractée, du boîtier (4) de l'appareil radio et la manchette (2) λ/4 sont reliées l'une à l'autre par l'intermédiaire d'une articulation.
